# EUROPÄISCHE PATENTSCHRIFT

(11) **EP 3 083 823 B1**
(45) Veröffentlichungstag und Bekanntmachung des Hinweises auf die Patenterteilung: **27.03.2019**
(21) Anmeldenummer: 14812762.4
(22) Anmeldetag: 18.12.2014
(51) Int. Cl.: C08L 25/08, C08L 51/04, B29C 67/00

(54) **FORMMASSEN BASIEREND AUF VINYLAROMAT-POLYMEREN FÜR DEN 3D DRUCK**
MOLDING MATERIALS BASED ON VINYL AROMATIC POLYMERS FOR 3-D PRINTING
MATIÈRES À MOULER À BASE DE POLYMÈRES VINYL-AROMATIQUES POUR L'IMPRESSION EN 3D

(30) Priorität: 18.12.2013 EP 13198151
(43) Veröffentlichungstag der Anmeldung: 26.10.2016
(73) Patentinhaber: INEOS Styrolution Group GmbH, 60325 Frankfurt (DE)
(72) Erfinder: NIESSNER, Norbert, 67159 Friedelsheim (DE); EISENTRÄGER, Frank, 50996 Köln (DE)
(74) Vertreter: Jacobi, Markus Alexander
(86) Internationale Anmeldenummer: PCT/EP2014/078489
(87) Internationale Veröffentlichungsnummer: WO 2015/091815

(56) Entgegenhaltungen:
- DE-A1-102007 061 445

## Beschreibung

Die Erfindung betrifft eine thermoplastische Formmasse basierend auf Vinylaromatpolymeren mit optimiertem Zähigkeits/Viskositäts-Verhältnis und deren Verwendung für den 3D-Druck.

Die Verwendung von amorphen Thermoplasten für den 3D-Druck, insbesondere von ABS, ist bekannt. So wird in der EP-A 1015215 ein Verfahren zur Herstellung eines dreidimensionalen Objekts von vorbestimmter Form aus einem thermisch verfestigbaren Material beschrieben. Für den 3D-Druck wird zunächst das Material verflüssigt und extrudiert, unter Bewegung werden mehrere Schichten des Materials auf einen Träger aufgebracht, und dann wird das geformte Material durch Kühlen unter die Erstarrungstemperatur des Materials verfestigt. Als thermisch verfestigbares Material werden amorphe Thermoplasten, insbesondere Acrylnitril-Butadien-Styrol (ABS), verwendet.

EP-A 1087862 beschreibt ein Rapid-Prototyping-System zur Herstellung eines dreidimensionalen Gegenstands durch Extrusion und Aufbringen von erstarrbarem thermoplastischem Modellier- und Stützmaterial in mehreren Schichten. Das thermoplastische Material wird über eine Spule zugeführt. Als geeignetes modellierbares Material wird ABS genannt. Als brüchiges Stützmaterial, welches nach Fertigstellung des 3D-Modells entfernt wird, wird eine Mischung aus ABS und einem Polystyrol-Copolymer als Füllmaterial mit einem Anteil von bis zu 80% eingesetzt.

EP-A 1497093 beschreibt ein Verfahren zur Herstellung eines Prototyps eines Kunststoffspritzteils aus einem thermoplastischen Material, das verflüssigt in eine Form eingespritzt wird bis es deren Hohlraum ausfüllt und nach Aushärten den Prototyp bildet. Der Prototyp wird dabei via Fused Deposition Molding, einer speziellen 3D Druckmethode hergestellt. Das thermoplastische Material wird ausgewählt aus: ABS, Polycarbonat, Polystyrol, Acrylaten, amorphen Polyamiden, Polyestern, PPS, PPE, PEEK, PEAK und Mischungen davon, bevorzugt ist ABS. Um Schrumpfphänomene zu vermeiden werden vorzugsweise amorphe Thermoplasten eingesetzt.

US 2008/0071030 beschreibt ein thermoplastisches Material, welches zur Herstellung von dreidimensionalen Modellen durch mehrschichtige Abscheidung verwendet wird. Das thermoplastische Material enthält ein Basispolymer, ausgewählt aus der Gruppe bestehend aus: Polyethersulfonen, Polyetherimiden, Polyphenylsulfonen, Polyphenylenen, Polycarbonaten, Polysulfonen, Polystyrolen, Acrylaten, amorphen Polyamiden, Polyestern, Nylon, Polyetheretherketonen und ABS, und 0,5 bis 10 Gew.-% eines Silikon-Trennmittels. Bevorzugt wird als Basispolymer Polyethersulfon eingesetzt und Mischungen davon mit Polystyrol (3 bis 8 Gew.-%). Zur Vermeidung von Schrumpf werden vorzugsweise amorphe Polymere und gegebenenfalls übliche Füllmaterialien eingesetzt.

In der US 2009/0295032 werden für den 3D-Druck modifizierte ABS Materialien vorgeschlagen. Die ABS-Materialien werden durch zusätzliche Monomere, Oligo- oder Polymere, insbesondere Acrylate modifiziert. Beispielhaft werden MMA-modifizierte ABS/Poly(Styrol-Acrylnitril)-Blends, insbesondere CYCOLAC ABS MG 94, genannt. Die Proportionen der Komponenten und die Viskosität der Blends werden nicht angegeben.

Die vorgenannten Materialien sind jedoch oftmals für den 3D-Druck zu spröde und in Bezug auf die Zähigkeit sowie ihren Geruch verbesserungsbedürftig. Darüber hinaus ist bei den Materialien des Standes der Technik oftmals auch die Viskosität unter den Bedingungen des Schmelzflussindexes bei niedrigen Scherraten zu hoch und ebenfalls verbesserungsbedürftig.

Eine Aufgabe der vorliegenden Erfindung ist es verbesserte geruchsarme thermoplastische Materialien für den 3-D-Druck mit optimiertem Zähigkeits/Viskositäts-Verhältnis bereitzustellen. Die Aufgabe wurde gelöst durch eine Formmasse wie nachstehend beschrieben und deren Verwendung für den 3D-Druck.

Gegenstand der Erfindung ist eine thermoplastische Formmasse für den 3D-Druck enthaltend (bzw. bestehend aus) Komponenten A, B und C:
A: 40 bis 100 Gew.-% mindestens eines Polymers A mit einer mittleren Molmasse Mw von 150.000 bis 360.000 g/mol, ausgewählt aus der Gruppe bestehend aus: Standard-Polystyrol, schlagfestem Polystyrol (HIPS), Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren,
   wobei in dem schlagfesten Polystyrol enthaltend Polystyrol und Dienkautschuk, der Dienkautschukanteil 5 bis 12 Gew.-% und der Polystyrolanteil 88 bis 95 Gew.-% beträgt und deren Summe 100 Gew.-% ergibt;
B: 0 bis 60 Gew.-% eines oder mehrerer weiterer Polymere B ausgewählt aus: Polycarbonaten, Polyamiden, Poly(meth)acrylaten und Polyestern und Vinylaromat-Dien-Copolymeren (SBC),
C: 0 bis 50 Gew.-% übliche Additive und Hilfsmittel, wobei die Anteile von A, B und C jeweils auf die gesamte Formmasse bezogen sind und deren Summe 100 Gew.-% ergibt,
dadurch gekennzeichnet, dass die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt, der Restmonomergehalt der Formmasse nicht mehr als 2000 ppm beträgt, und deren Lösungsmittelgehalt nicht mehr als 1000 ppm beträgt.

Die Bestimmung der gewichtsmittleren Molmasse Mw erfolgt mittels GPC mit UV-Detektion.

Im Sinne der vorliegenden Erfindung ist unter 3D-Druck die Herstellung von dreidimensionalen Formkörpern mit Hilfe einer für den 3D-Druck geeigneten Vorrichtung (3D-Drucker) zu verstehen.

In der erfindungsgemäß verwendeten Formmasse beträgt der Anteil der Komponente A im Allgemeinen 40 bis 100 Gew.-%, bevorzugt 70 bis 100 Gew.-%, besonders bevorzugt 80 bis 100 Gew.-%, bezogen auf die gesamte Formmasse.

Der Anteil der Komponente B beträgt im Allgemeinen 0 bis 60 Gew.-%, bevorzugt 0 bis 30 Gew.-%, besonders bevorzugt 0 bis 20 Gew.-%, bezogen auf die gesamte Formmasse. Falls Polymer B in der Formmasse vorhanden ist, beträgt dessen Mindestanteil üblicherweise 0,1 Gew.-%.

Der Anteil der Additive und/oder Hilfsmittel C beträgt im Allgemeinen 0 bis 50 Gew.-%, bevorzugt 0,1 bis 30, besonders bevorzugt 0,2 bis 10 Gew.-%, bezogen auf die gesamte Formmasse. Falls Additive und/oder Hilfsmittel C in der Formmasse vorhanden sind, beträgt deren Mindestanteil üblicherweise 0,1 Gew.-%.

Bevorzugt ist eine Formmasse bestehend aus den Komponenten A, B und C.

Weiterhin bevorzugt enthält die erfindungsgemäß eingesetzte Formmasse im Wesentlichen amorphe Polymere, d.h. mindestens die Hälfte (mindestens 50 Gew.-%) der in der Formmasse enthaltenen Polymere sind amorphe Polymere

### PolymerA

Polymer A ist bevorzugt ausgewählt aus der Grupppe bestehend aus: Standard-Polystyrol, schlagfestem Polystyrol (HIPS), Styrol-Acrylnitril-Copolymeren und α-Methylstyrol-Acrylnitril-Copolymeren.

Besonders bevorzugt wird als Polymer A schlagfestes Polystyrol (HIPS) und/oder Standard-Polystyrol eingesetzt.

Als Polymer A geeignete schlagfeste Polystyrole (HIPS) und Standard-Polystyrole (GPPS), deren Herstellung, Struktur und Eigenschaften sind in der Übersichtsliteratur (A. Echte, F. Haaf, J. Hambrecht in Angew. Chem. (Int. Ed. Engl.) 20, 344-361, (1981); sowie im Kunststoffhandbuch, Hrg. R. Vieweg und G. Daumiller, Bd. 4 "Polystyrol", Carl-Hanser-Verlag München (1996) eingehend beschrieben.

Darüber hinaus können die verwendeten schlagzähen Polystyrole durch die Verwendung spezieller Polybutadien-Kautschuke z.B. mit gegenüber herkömmlichen Kautschuken veränderten 1,4-cis bzw. 1,4-trans-Anteil oder 1,2 und 1,4-Verknüpfungsanteil strukturell verändert sein. Ferner können anstelle von Polybutadienkautschuk auch andere Dienkautschuke sowie Elastomere von der Art des Ethylen-Propylen-Dien-Copolymer (EPDM-Kautschuk) sowie hydrierte Dienkautschuke eingesetzt werden.

In dem als Polymer A eingesetzten schlagfesten Polystyrol beträgt der Dienkautschukanteil, insbesondere der Polybutadienkautschukanteil, im Allgemeinen 5 bis 12 Gew.-%, bevorzugt 6 bis 10 Gew.-%, besonders bevorzugt 7 bis 9 Gew.-%, und der Polystyrolanteil beträgt im Allgemeinen 88 bis 95 Gew.-%, bevorzugt 90 bis 94 Gew.-%, besonders bevorzugt 91 bis 93 Gew.-%, wobei die Summe aus Polystyrol-und Dienkautschukanteil 100 Gew.-% ergibt.

Geeignetes Standard-Polystyrol wird nach dem Verfahren der anionischen bzw. radikalischen Polymerisation hergestellt. Die durch das Polymerisationsverfahren beeinflussbare Uneinheitlichkeit des Polymers ist dabei von untergeordneter Bedeutung. Bevorzugt werden Standard-Polystyrol und schlagzähes Polystyrol, deren toluollöslicher Anteil ein mittleres Molekulargewicht Mw von 150.000 bis 300.000 g/mol, besonders bevorzugt 150.000 bis 270.000 g/mol, aufweist und die gegebenenfalls noch mit Additiven, wie beispielsweise Mineralöl (z.B. Weißöl), Stabilisator, Antistatika, Flammschutzmittel oder Wachsen ausgerüstet sind.

Erfindungsgemäß als Polymer A eingesetzte SAN-Copolymere und α-Methylstyrol-Acrylnitril-Copolymere (AMSAN) enthalten im Allgemeinen 18 bis 35 Gew.-%, bevorzugt 20 bis 32 Gew.-%, besonders bevorzugt 22 bis 30 Gew.-% Acrylnitril (AN), und 82 bis 65 Gew.-%, bevorzugt 80 bis 68 Gew.-%, besonders bevorzugt 78 bis 70 Gew.-% Styrol (S) bzw. α-Methylstyrol (AMS), wobei die Summe aus Styrol bzw. α-Methylstyrol und Acrylnitril 100 Gew.-% ergibt.

Die eingesetzten SAN und AMSAN-Copolymere weisen im Allgemeinen eine mittlere Molmasse Mw von 150.000 bis 350.000 g/mol, bevorzugt 150.000 bis 300.000 g/mol, besonders bevorzugt 150.000 bis 250.000 g/mol, und ganz besonders bevorzugt 150.000 bis 200.000 g/mol auf.

Als SAN-Copolymere geeignet sind handelsübliche SAN-Copolymere wie beispielsweise Luran® von der Firma Styrolution. Bevorzugt werden SAN-Copolymere mit einem S/AN-Verhältnis (in Gewichtsprozent) von 81/19 bis 67/33 und einem MVR (gemessen nach ISO 1133 bei 220°C und 10 kg Last) von mindestens 10 ml/10 min eingesetzt wie beispielsweise Luran 368 eingesetzt.

Ferner können erfindungsgemäß als Polymer A SMMA-Copolymere eingesetzt werden, die im Allgemeinen 18 bis 50 Gew.-%, bevorzugt 20 bis 30 Gew.-% Methylmethacrylat (MMA), und 50 bis 82 Gew.-%, bevorzugt 80 bis 70 Gew.-% Styrol enthalten, wobei die Summe aus Styrol und MMA 100 Gew.-% ergibt.

Weiterhin können erfindungsgemäß als Polymer A SMSA-Copolymere eingesetzt werden, die im Allgemeinen 10 bis 40 Gew.-%, bevorzugt 20 bis 30 Gew.-% Maleinsäureanhydrid (MSA), und 60 bis 90 Gew.-%, bevorzugt 80 bis 70 Gew.-% Styrol enthalten, wobei die Summe aus Styrol und MSA 100 Gew.-% ergibt.

Die vorgenannten Polymere A haben eine Viskositätszahl VZ (ermittelt nach DIN 53 726 bei 25°C, an einer 0,5 Gew.-%igen Lösung des Polymers B1 in Dimethylformamid) von 50 bis 120, bevorzugt 52 bis 100 und besonders bevorzugt 55 bis 80 ml/g. Die Polymere B1 werden in bekannter Weise durch Masse-, Lösungs-, Suspensions-, Fällungs- oder Emulsionspolymerisation erhalten, wobei Masse- und Lösungspolymerisation bevorzugt sind. Einzelheiten dieser Verfahren sind z. B. im Kunststoffhandbuch, Hrg. R. Vieweg und G. Daumiller, Bd. 4 "Polystyrol", Carl-Hanser-Verlag München 1996, S. 104 ff sowie in "Modern Styrenic Polymers: Polystyrenes and Styrenic Copolymers" (Eds., J. Scheirs, D. Priddy, Wiley, Chichester, UK, (2003), Seiten 27 bis 29) und in GB-A 1472195 beschrieben.

### Polymer B

Die erfindungsgemäße Formmasse kann zusätzlich mindestens ein weiteres Polymer B ausgewählt aus Polycarbonaten, Polyamiden, Poly(meth)acrylaten und Polyestern und Vinylaromat-Dien-Copolymeren (SBC) enthalten.

Bevorzugt als Polymer B eingesetzt werden Polycarbonate, Polyamide und/oder Poly(meth)acrylate.

Geeignete Polycarbonate sind an sich bekannt. Sie sind z.B. entsprechend den Verfahren der DE-B 1 300 266 durch Grenzflächenpolykondensation oder gemäß dem Verfahren der DE-A 14 95 730 durch Umsetzung von Biphenylcarbonat mit Bisphenolen erhältlich. Bevorzugtes Bisphenol ist 2,2-Di(4-hydroxyphenyl)propan, im allgemeinen - wie auch im folgenden - als Bisphenol A bezeichnet.

Anstelle von Bisphenol A können auch andere aromatische Dihydroxyverbindungen verwendet werden, insbesondere 2,2-Di(4-hydroxyphenyl)pentan, 2,6-Dihydroxynapthalin, 4,4'-Dihydroxydiphenylsulfon, 4,4'-Dihydroxydiphenylether, 4,4'-Dihydroxydiphenylsulfit, 4,4'-Dihydroxydiphenylmethan, 1,1-Di-(4-hydroxyphenyl)ethan oder 4,4-Dihydroxydiphenyl sowie Mischungen der vorgenannten Dihydroxyverbindungen.

Besonders bevorzugte Polycarbonate sind solche auf der Basis von Bisphenol A oder Bisphenol A zusammen mit bis zu 30 mol.-% der vorstehend genannten aromatischen Dihydroxyverbindungen.

Die relative Viskosität dieser Polycarbonate liegt im Allgemeinen im Bereich von 1,1 bis 1,5, insbesondere 1,28 bis 1,4 (gemessen bei 25°C in einer 0,5 gew.-%igen Lösung in Dichlormethan).

Geeignete Polyester sind ebenfalls an sich bekannt und in der Literatur beschrieben. Sie enthalten einen aromatischen Ring in der Hauptkette, der von einer aromatischen Dicarbonsäure herrührt. Der aromatische Ring kann auch substituiert sein, z.B. durch Halogen wie Chlor und Brom oder durch C1-C4-Alkylgruppen wie Methyl-, Ethyl-, i-bzw. n-Propyl- und n-, i- bzw. tert.-Butylgruppen.

Die Polyester können durch Umsetzung von aromatischen Dicarbonsäuren, deren Estern oder anderer esterbildender Derivate derselben mit aliphatischen Dihydroxyverbindungen in an sich bekannter Weise hergestellt werden.

Als bevorzugte Dicarbonsäuren sind Naphthalindicarbonsäure, Terephthalsäure und Isophthalsäure oder deren Mischungen zu nennen. Bis zu 10 mol.-% der aromatischen Dicarbonsäuren können durch aliphatische oder cycloaliphatische Dicarbonsäuren wie Adipinsäure, Azelainsäure, Sebacinsäure, Dodecandisäuren und Cyclohexandicarbonsäuren ersetzt werden.

Von den aliphatischen Dihydroxyverbindungen werden Diole mit 2 bis 6 Kohlenstoffatomen, insbesondere 1,2-Ethandiol, 1,4-Butandiol, 1,6-Hexandiol, 1,4-Hexandiol, 1,4-Cyclohexandiol und Neopentylglykol oder deren Mischungen bevorzugt.

Als besonders bevorzugte Polyester sind Polyalkylenterephthalate, die sich von Alkandiolen mit 2 bis 6 C-Atomen ableiten, zu nennen. Von diesen werden insbesondere Polyethylenterephthalat, Polyethylennaphthalat und Polybutylenterephthalat bevorzugt.

Die Viskositätszahl der Polyester liegt im Allgemeinen im Bereich von 60 bis 200 ml/g (gemessen in einer 0,5 gew.-%igen Lösung in einem Phenol/o-Dichlorbenzolgemisch (Gew.-Verh. 1:1 bei 25°C)).

Als Poly(meth)acrylate seien insbesondere Polymethylmethacrylat (PMMA) sowie Copolymere auf der Basis von Methylmethacrylat mit bis zu 40 Gew.-% weiterer copolymerisierbarer Monomerer genannt, wie sie beispielsweise unter den Bezeichnungen Lucryl® von Fa. Lucite oder Plexiglas® von Fa. Evonik erhältlich sind.

Teilkristalline, bevorzugt lineare Polyamide wie Polyamid-6, Polyamid-6,6, Polyamid-4,6, Polyamid-6,12 und teilkristalline Copolyamide auf Basis dieser Komponenten sind geeignet. Weiter können teilkristalline Polyamide eingesetzt werden, deren Säurekomponente ganz oder teilweise aus Adipinsäure und/oder Terephthalsäure und/oder Isophthalsäure und/oder Korksäure und/oder Sebacinsäure und/oder Acelainsäure und/oder Dodecandicarbonsäure und/oder einer Cyclohexandicarbonsäure besteht, und deren Diaminkomponente ganz oder teilweise insbesondere aus m und/oder p-Xylylendiamin und/oder Hexamethylendiamin und/oder 2,2,4- und/oder 2,4,4-Trimethylhexamethylendiamin und/oder Isophorondiamin besteht, und deren Zusammensetzungen im Prinzip bekannt sind (vgl. Encyclopedia of Polymers, Vol. 11, S. 315 ff.).

Die Molekulargewichte Mn (Zahlenmittel) der als Komponente B geeigneten Polyamide liegen bevorzugt im Bereich zwischen 5.000 und 100.000, besonders bevorzugt zwischen 10.000 und 80.000.

Geeignet sind teilkristalline lineare Polyamide z.B. mit einer relativen Viskosität von 2,2 bis 4,5, gemessen in 0,5%iger Lösung (0,5 g/100 ml) in 96 gew.-%iger Schwefelsäure bei 25oC. Bevorzugt sind Polyamide, die sich ganz oder teilweise von Lactamen mit 7 bis 13 Ringgliedern ableiten, wie Polycaprolactam, Polycapryllactam oder Polylaurinlactam.

Geeignet sind ferner Polyamide, die durch Umsetzung von Dicarbonsäuren mit einem oder mehreren Diaminen erhalten werden. Geeignete Dicarbonsäuren sind beispielsweise Alkandicarbonsäuren mit 6 bis 12, insbesondere 6 bis 10 Kohlenstoffatomen, insbesondere Adipinsäure. Geeignete Diamine sind beispielsweise Alkan- oder Cycloalkandiamine mit 4 bis 12, insbesondere 4 bis 8 Kohlenstoffatomen; Hexamethylendiamin, m-Xylylendiamin, Bis(4-aminophenyl)methan, Bis(4-aminocyclohexyl)methan oder Bis(4-aminophenyl)propan-2,2 oder deren Mischungen sind besonders geeignete Partner zur Herstellung solcher Polyamide. Es kann vorteilhaft sein, die genannten Polyamide für sich herzustellen und deren Mischungen zu verwenden.

Besondere technische Bedeutung haben Polyamid-6 (Polycaprolactam), Polyamid-6,6 (Polyhexamethylenadipinamid) und Polyamide, die zu mindestens 80 Gew.-% aus wiederkehrenden Einheiten der Formel -[-NH-(CH2)4-NH-CO-(CH2)4-CO-]- aufgebaut sind. Die zuletzt genannten Polyamide sind durch Kondensation von 1,4-Diaminobutan mit Adipinsäure erhältlich. Geeignete Herstellungsverfahren für Polyamide sind z.B. in EP-A 038 094, EP-A 038 582 und EP-A 039 524 beschrieben.

Ebenfalls geeignet sind Polyamide mit geringem Anteil, vorzugsweise bis etwa 10 Gew.-%, an anderen einkondensierbaren Bestandteilen, insbesondere anderen Amidbildnern wie beispielsweise a,w-Aminosäuren oder N-Carbonsäure-anhydriden (Leuchs-anhydriden) von Aminosäuren.

Ferner können die erfindungsgemäßen Formmassen als Komponente B ein teilaromatisches Copolyamid mit dem nachstehend beschriebenen Aufbau enthalten. Bevorzugte teilaromatische Copolyamide B enthalten 40 bis 90 Gew.-% Einheiten, die sich von Terephthalsäure und Hexamethylendiamin ableiten. Ein geringer Anteil der Terephthalsäure, vorzugsweise nicht mehr als 10 Gew.-% der Gesamtmenge an eingesetzten aromatischen Dicarbonsäuren kann durch Isophthalsäure oder andere aromatische Dicarbonsäuren ersetzt werden, vorzugsweise solche, in denen die Carboxylgruppen in para-Stellung stehen.

Neben den Einheiten, die sich von Terephthalsäure und Hexamethylendiamin ableiten, enthalten die teilaromatischen Copolyamide Einheiten, die sich von ε-Caprolactam ableiten und/oder Einheiten, die sich von Adipinsäure und Hexamethylendiamin ableiten.

Der Anteil an Einheiten, die sich von ε-Caprolactam ableiten, beträgt bis zu 50 Gew. - %, vorzugsweise 20 bis 50 Gew.-%, insbesondere 25 bis 40 Gew.-%, während der Anteil an Einheiten, die sich von Adipinsäure und Hexamethylendiamin ableiten, bis zu 60 Gew.-%, vorzugsweise 30 bis 60 Gew.-% und insbesondere 35 bis 55 Gew.-% beträgt.

Die Copolyamide können auch sowohl Einheiten von ε-Caprolactam als auch Einheiten von Adipinsäure und Hexamethylendiamin enthalten; in diesem Fall beträgt der Anteil an Einheiten, die frei von aromatischen Gruppen sind, bevorzugt mindestens 10 Gew.-%, vorzugsweise mindestens 20 Gew.-%. Das Verhältnis der Einheiten, die sich von e-Caprolactam und von Adipinsäure und Hexamethylendiamin ableiten, unterliegt dabei keiner besonderen Beschränkung.

Der Schmelzpunkt besonders geeigneter teilaromatischer Copolyamide liegt z.B. im Bereich von 260 bis über 300°C, wobei dieser hohe Schmelzpunkt auch mit einer hohen Glasübergangstemperatur von in der Regel mehr als 75°C, insbesondere mehr als 85°C verbunden ist. Binäre Copolyamide auf der Basis von Terephthalsäure, Hexamethylendiamin und ε-Caprolactam weisen bei einem Gehalt von etwa 70 Gew.-% an Einheiten, die sich von Terephthalsäure und Hexamethylendiamin ableiten, einen Schmelzpunkt im Bereich von 300°C und eine Glasübergangstemperatur von mehr als 110°C auf. Binäre Copolyamide auf der Basis von Terephthalsäure, Adipinsäure und Hexamethylendiamin erreichen bereits bei einem Gehalt von etwa 55 Gew.-% Einheiten aus Terephthalsäure und Hexamethylendiamin einen Schmelzpunkt von 300°C und mehr, wobei die Glasübergangstemperatur nicht ganz so hoch liegt wie bei binären Copolyamiden, die ε-Caprolactam anstelle von Adipinsäure bzw. Adipinsäure/Hexamethylendiamin enthalten.

Geeignete teilaromatische Copolyamide können nach den in den EP-A 129 195 und EP-A 129 196 beschriebenen Verfahren hergestellt werden.

Erfindungsgemäß können als Polymer B ferner amorphe Polyamide verwendet werden. Basierend auf den bereits genannten Monomeren werden noch zusätzliche, häufig mit einer oder mehreren, die Kristallisation behindernden Seitengruppen versehene Monomere einkondensiert. Als Resultat erhält man ein in der Regel transparentes Polyamid.

Weiterhin können als Polymer B Vinylaromat-Dien-Blockcopolymere (SBC), insbesondere Styrol-Butadien-Blockcopolymere, verwendet werden. Bevorzugt sind Blockcopolymere, enthaltend mindestens zwei "Hartblöcke" S1 und S2 (aus vinylaromatischen Monomeren) und mindestens einen dazwischenliegenden "Weichblock" (aus Dienen und gegebenenfalls vinylaromatischen Monomeren), wobei der Anteil der Hartblöcke über 40 Gew.-%, bezogen auf das gesamte Blockcopolymer, beträgt.

Als vinylaromatische Monomere können sowohl für die Hartblöcke S1 und S2 als auch für die Weichblöcke Styrol, α-Methylstyrol, p-Methylstyrol, Ethylstyrol, tert.-Butylstyrol, Vinyltoluol oder Mischungen davon verwendet werden. Bevorzugt wird Styrol verwendet.

Als Diene für den Weichblock B und/oder B/S werden bevorzugt Butadien, Isopren, 2,3-Dimethylbutadien, 1,3-Pentadien, 1,3-Hexadiene oder Piperylen oder Mischungen davon verwendet. Besonders bevorzugt wird 1, 3-Butadien verwendet.

Der Weichblock wird als B oder, falls dieser aus Dienen und vinylaromatischen Monomeren gebildet wird, als B/S bezeichnet.

Bevorzugte Blockcopolymere enthalten außenliegende Hartblöcke S1 und S2 mit unterschiedlicher Blocklänge. Das Molekulargewicht von S1 liegt bevorzugt im Bereich von 5000 bis 30000 g/mol, insbesondere im Bereich von 10000 bis 20000 g/mol. Das Molekulargewicht von S2 beträgt bevorzugt über 35000 g/mol. Bevorzugte Molekulargewichte von S2 liegen im Bereich von 50000 bis 150000 g/mol.

Zwischen den Hartblöcken S1 und S2 können sich auch mehrere Weichblöcke befinden. Bevorzugt werden mindestens 2, vorzugsweise statistische, Weichblöcke (B/S)₁ und (B/S)₂ mit unterschiedlichen Anteilen an vinylaromatischen Monomeren und damit unterschiedlichen Glasübergangstemperaturen.

Die Blockcopolymeren können eine lineare oder eine sternförmige Struktur aufweisen.

Als lineares Blockcopolymer wird bevorzugt eines der Struktur S1-(B/S)₁-(B/S)₂-S2 eingesetzt. Das molare Verhältnis von vinylaromatischem Monomer zu Dien S/B liegt im Block (B/S)₁ bevorzugt unter 0,25 und im Block (B/S)₂ bevorzugt im Bereich von 0,5 bis 2.

Als sternförmige Blockcopolymere werden bevorzugt solche mit einer Struktur aus mindestens einem Sternast aus der Blockfolge S1-(B/S) und einem Sternast der Blockfolge S2(B/S) oder solche mit mindestens einem Sternast der Blockfolge S1-(B/S)-S3 und mindestens einem Sternast der Blockfolge S2-(B/S)-S3. S3 steht hierbei für einen weiteren Hartblock aus den genannten vinylaromatischen Monomeren.

Besonders bevorzugt werden sternförmige Blockcopolymere mit Strukturen, die mindestens einen Sternast mit der Blockfolge SI-(B/S)₁-(B/S)₂ und mindestens einen Sternast mit der Blockfolge S2-(B/S)₁-(B/S)₂ oder die mindestens einen Sternast mit der Blockfolge S1-(B/S)₁-(B/S)₂-S3 und mindestens einen Sternast mit der Blockfolge S2- (B/S)₁-(B/S)₂-S3 aufweisen. Das molare Verhältnis von vinylaromatischem Monomer zu Dien S/B liegt im äußeren Block (B/S)₁ bevorzugt im Bereich von 0,5 bis 2 und im Block (B/S)₂ bevorzugt unterhalb 0,5.

Die Blockcopolymere B werden vorzugsweise durch sequentielle anionische Polymerisation hergestellt. Die vorgenannten SBCs sind bekannt. Ihre Herstellung wird beispielsweise in "Modern Styrenic Polymers: Polystyrenes and Styrenic Copolymers" (Eds., J. Scheirs, D. Priddy, Wiley, Chichester, UK, (2003), Seiten 502 bis 507) beschrieben.

Ferner sind geeignete Vinylaromat-Dien-Blockcopolymere (SBC) z.B. auch als Styrolux® (Hersteller Styrolution, Frankfurt) im Handel erhältlich.

### Additive und/oder Hilfsmittel C

Die erfindungsgemäße Formmasse kann gegebenenfalls übliche Additive und/oder Hilfsmittel C wie Stabilisatoren, Oxidationsverzögerer, Mittel gegen Wärmezersetzung und Zersetzung durch ultraviolettes Licht, Gleit- und Entformungsmittel, Färbemittel wie Farbstoffe und Pigmente, faser- und pulverförmige Füll- und Verstärkungsmittel, Keimbildungsmittel, Weichmacher usw. enthalten, deren Anteil in der Regel nicht mehr als 50 Gew.-% bevorzugt nicht mehr als 40 Gew.-% beträgt.

Als Beispiele für Oxidationsverzögerer und Wärmestabilisatoren sind Halogenide von Metallen der Gruppe I des periodischen Systems, z.B. Natrium-, Kalium- und/oder Lithiumhalogenide, ggf. in Verbindung mit Kupfer-(I)-Halogeniden, z.B. Chloriden, Bromiden, Jodiden, sterisch gehinderte Phenole, Hydrochinone, verschiedene substituierte Vertreter dieser Gruppen und deren Mischungen in Konzentrationen bis zu 1 Gew.-%, bezogen auf das Gewicht der thermoplastischen Formmasse genannt.

Als UV-Stabilisatoren, die im Allgemeinen in Mengen bis zu 2 Gew.-%, bezogen auf die Formmasse, verwendet werden, seien verschiedene substituierte Resorcine, Salicylate, Benzotriazole und Benzophenone genannt.

Weiterhin können organische Farbstoffe wie Nigrosin, Pigmente wie Titandioxid, Phthalocyanine, Ultramarinblau und Ruß als Farbstoffe zugesetzt werden, sowie faser-und pulverförmige Füllstoffe und Verstärkungsmittel. Beispiele für letztere sind Kohlenstoffasern, Glasfasern, amorphe Kieselsäure, Calciumsilicat (Wollastonit), Aluminiumsilicat, Magnesiumcarbonat, Kaolin, Kreide, gepulverter Quarz, Glimmer und Feldspat. Der Anteil derartiger Füll- und Farbstoffe beträgt im Allgemeinen bis zu 50 Gew.-%, bevorzugt bis zu 35 Gew.-%.

Als Keimbildungsmittel können z.B. Talkum, Calciumfluorid, Natriumphenylphosphinat, Aluminiumoxid, Siliciumdioxid und Nylon 22 eingesetzt werden.

Gleit- und Entformungsmittel, welche in der Regel in Mengen bis zu 1 Gew.-% eingesetzt werden können, sind z.B. langkettige Fettsäuren wie Stearinsäure oder Behensäure, deren Salze (z.B. Ca- oder Zn-Stearat) oder Ester (z.B. Stearylstearat oder Pentaerythrittetrastearat) sowie Amidderivate (z.B. Ethylenbisstearylamid). Zur besseren Verarbeitung können in Mengen bis zu 0,1 Gew.-% Antiblockmittel auf mineralischer Basis den erfindungsgemäßen Formmassen zugesetzt werden. Als Beispiele seien amorphe oder kristalline Kieselsäure, Calciumcarbonat oder Aluminiumsilikat genannt.

Als Verarbeitungshilfsmittel kann beispielsweise Mineralöl, vorzugsweise medizinisches Weißöl, in Mengen bis zu 5 Gew.-%, vorzugsweise bis zu 2 Gew.-% eingesetzt werden.

Als Beispiele für Weichmacher seien Phthalsäuredioctylester, Phthalsäuredibenzylester, Phthalsäurebutylbenzylester, Kohlenwasserstofföle, N-(n-Butyl)benzolsulfonamid und o- und p-Tolylethylsulfonamid genannt.

Zur weiteren Verbesserung der Schwerentflammbarkeit können alle für die jeweiligen Thermoplaste bekannten Flammschutzmittel zugegeben werden, insbesondere solche auf Basis von Phosphorverbindungen bzw. roter Phosphor selbst.

Die Herstellung der erfindungsgemäßen Formmassen aus den Komponenten a und b (und gegebenenfalls weiteren Polymeren B und Additiven und/oder Hilfsmitteln C kann nach allen bekannten Methoden erfolgen.

Die Polymere A werden ,sofern enthalten, mit den weiteren Komponenten B und/oder C, in einer Mischvorrichtung vermischt, wobei eine im Wesentlichen schmelzflüssige Polymermischung entsteht.

"Im wesentlichen schmelzflüssig" bedeutet, dass die Polymermischung neben dem überwiegenden, schmelzflüssigen (erweichten) Anteil noch einen gewissen Anteil fester Bestandteile enthalten kann, beispielsweise ungeschmolzene Füll- und Verstärkungsstoffe wie Glasfasern, Metallflocken, oder auch ungeschmolzene Pigmente) Farbstoffe etc. "Schmelzflüssig" bedeutet, dass die Polymermischung zumindest zähflüssig ist, sie also zumindest in dem Maß erweicht ist, dass sie plastische Eigenschaften hat.

Als Mischvorrichtungen werden solche verwendet, die dem Fachmann bekannt sind. Man kann die Komponenten a und b, und - sofern enthalten - B und/oder C beispielsweise durch gemeinsames Extrudieren, Kneten oder Verwalzen vermischen, wobei die vorgenannten Komponenten notwendigenfalls zuvor aus der bei der Polymerisation erhaltenen Lösung oder aus der wässrigen Dispersion isoliert worden sind.

Im Falle des Einmischens einer oder mehrerer Komponenten in Form einer wässrigen Dispersion bzw. einer wässrigen oder nichtwässrigen Lösung, wird das Wasser bzw. das Lösungsmittel über eine Entgasungseinheit aus der Mischvorrichtung, bevorzugt einem Extruder, entfernt.

Als Mischvorrichtungen für die Durchführung des Verfahrens sind beispielsweise diskontinuierlich arbeitende, beheizte Innenkneter mit oder ohne Stempel, kontinuierlich arbeitende Kneter wie z. B. kontinuierliche Innenkneter, Schneckenkneter mit axial oszillierenden Schnecken, Banbury-Kneter, weiterhin Extruder sowie Walzenstühle, Mischwalzwerke mit beheizten Walzen und Kalander, zu nennen.

Bevorzugt wird als Mischvorrichtung ein Extruder verwendet. Für die Schmelzextrusion sind beispielsweise Ein- oder Zweiwellenextruder besonders geeignet. Ein Zweiwellenextruder ist bevorzugt.

In manchen Fällen bewirkt die beim Vermischen durch die Mischvorrichtung eingebrachte mechanische Energie bereits ein Schmelzen der Mischung, so dass die Mischvorrichtung nicht beheizt werden muss. Ansonsten wird die Mischvorrichtung in der Regel beheizt. Die Temperatur richtet sich nach den chemischen und physikalischen Eigenschaften der Komponenten a und b, und - sofern enthalten - B und/oder C, und ist so zu wählen, dass eine im Wesentlichen schmelzflüssige Polymermischung entsteht. Andererseits soll die Temperatur nicht unnötig hoch sein, um eine thermische Schädigung der Polymermischung zu vermeiden. Die eingebrachte mechanische Energie kann jedoch auch so hoch sein, dass die Mischvorrichtung sogar gekühlt werden muss. Üblicherweise betreibt man die Mischvorrichtung bei 160 bis 400, bevorzugt 180 bis 300°C.

Die erfindungsgemäß eingesetzte Formmasse zeichnet sich dadurch aus, dass deren Restmonomergehalt nicht mehr als 2000 ppm, vorzugsweise nicht mehr als 1000 ppm, besonders bevorzugt nicht mehr als 500 ppm beträgt. Unter Restmonomergehalt ist der Anteil an nicht umgesetzten (nicht einpolymerisierten) Monomeren in der Formmasse zu verstehen.

Ferner zeichnet sich die erfindungsgemäß eingesetzte Formmasse dadurch aus, dass deren Lösungsmittelgehalt (wie z.B. von Ethylbenzol, Toluol usw.) nicht mehr als 1000 ppm, vorzugsweise nicht mehr als 500 ppm, besonders bevorzugt nicht mehr als 200 ppm beträgt.

Der geringe Restmonomer- und Lösungsmittelgehalt kann dadurch erzielt werden, dass übliche Verfahren zur Reduzierung von Restmonomeren und Lösungsmitteln aus Polymerschmelzen, wie z.B. im Kunststoffhandbuch, Hrg. R. Vieweg und G. Daumiller, Bd. 4 "Polystyrol", Carl-Hanser-Verlag München (1996), S. 121 bis 139 beschrieben, angewandt werden. In diesen Verfahren werden typische Entgasungsapparate wie beispielsweise Teilverdampfer, Flachverdampfer, Strangentgaser, Dünnschichtverdampfer oder Entgasungsextruder eingesetzt.

Durch den geringen Restmonomergehalt sowie Lösungsmittelgehalt ist die erfindungsgemäß eingesetzte Formmasse geruchsarm und eignet sich daher hervorragend für 3D-Drucker im Heimanwendungsbereich (home-use).

Darüber hinaus enthält die Formmasse nicht mehr als 500 ppm, bevorzugt nicht mehr als 400 ppm, besonders bevorzugt nicht mehr als 300 ppm von Übergangsmetallen wie beispielsweise Fe, Mn und Zn. Formmassen mit einem solchen niedrigen Gehalt an Übergangsmetallen lassen sich beispielsweise dadurch erhalten, dass, falls zum Starten der Polymerisation der in der Formmasse enthaltenen Polymere Redoxinitiatoren eingesetzt werden, diese Redoxinitiatoren nur in geringen Mengen in Kombination mit Peroxiden verwendet werden. Weiterhin sollten deshalb in der Formmasse nur geringe Mengen an übergangsmetallhaltigen Mineralien (z.B. Pigmente) enthalten sein.

Zur Vermeidung von starkem Schrumpf liegt der lineare thermische Ausdehnungskoeffizient CLTE der erfindungsgemäßen Formmasse bevorzugt unter 100 x 10⁻⁶ 1/K, besonders bevorzugt unter 85 x 10⁻⁶ 1/K. Ein derartiger CLTE lässt sich durch den Zusatz von Additiven, insbesondere Mineralien C, wie faser- und pulverförmigen Füll- und Verstärkungsmitteln und/oder Pigmenten, bevorzugt feinteiligen Mineralien mit einer mittleren Teilchengröße von < 500 µm, bevorzugt <100 µm, in Mengen von 0 bis zu 40 Gew.-%, jeweils bezogen auf die gesamte Formmasse, einstellen.

Beispiele für geeignete Mineralien (mineralische Additive) sind Kohlenstofffasern, Glasfasern, amorphe Kieselsäure, Calciumsilicat (Wollastonit), Aluminiumsilicat, Magnesiumcarbonat, Kaolin, Kreide, gepulverter Quarz, Glimmer und Feldspat.

Gemäß einer besonderen Ausführungsform enthält die erfindungsgemäße Formmasse:
40 bis 100 Gew.-% Polymer A,
0 bis 60 Gew.-% Polymer B und
0,1 bis 40 Gew.-% Mineralien C,
jeweils bezogen auf die gesamte Formmasse, und wobei die Summe aus A, B und C 100 Gew.-% ergibt.

Gemäß einer weiteren bevorzugten Ausführungsform enthält die erfindungsgemäße Formmasse:
40 bis 100 Gew.-% Polymer A,
0 bis 60 Gew.-% Polymer B und
0 bis 40 Gew.-% Additive und/oder Hilfsmittel C, insbesondere Mineralien C,
jeweils bezogen auf die gesamte Formmasse, und wobei die Summe aus A, B und C 100 Gew.-% ergibt.

Gemäß einer weiteren bevorzugten Ausführungsform enthält die erfindungsgemäße Formmasse:
40 bis 99,9 Gew.-% Polymer A,
0 bis 59,9 Gew.-% Polymer B und
0,1 bis 40 Gew.-% Mineralien C,
jeweils bezogen auf die gesamte Formmasse, und wobei die Summe aus A, B und C 100 Gew.-% ergibt.

Besonders bevorzugt ist eine erfindungsgemäße Formmasse enthaltend:
70 bis 100 Gew.-% Polymer A,
0 bis 30 Gew.-% Polymer B und
0,2 bis 30 Gew.-% Mineralien C.

Weiterhin besonders bevorzugt ist eine erfindungsgemäße Formmasse enthaltend:
70 bis 99,8 Gew.-% Polymer A,
0 bis 29,8 Gew.-% Polymer B und
0,2 bis 30 Gew.-% Mineralien C,
jeweils bezogen auf die gesamte Formmasse, und wobei die Summe aus A, B und C 100 Gew.-% ergibt.

Die Viskosität der gesamten Formmasse ist bei Scherraten von 1 bis 10 1/s und bei Temperaturen von 250 °C nicht höher als 1x10⁵ Pa*s, vorzugsweise nicht höher als 1x10⁴ Pa*s, besonders bevorzugt nicht höher als 1x10³ Pa*s.

Die Melt Volume Rate (MVR, gemessen nach ISO 1133 bei 220°C und 10 kg Last) beträgt im Allgemeinen mehr als 6 ml/10 min, bevorzugt mehr als 8 ml/10 min, besonders bevorzugt mehr als 12 ml/10 min.

Die vorgenannten Formmassen werden erfindungsgemäß zur Herstellung von dreidimensionalen Objekten von vorbestimmter Form mit Hilfe einer Vorrichtung für den 3D-Druck verwendet. Ein weiterer Gegenstand der Erfindung ist daher die Verwendung der erfindungsgemäßen Formmassen für den 3D-Druck.

Dabei können übliche für den 3D-Druck geeignete Vorrichtungen, insbesondere 3D-Drucker für die Heimanwendung (home-use), eingesetzt werden.

Der Aufbau des dreidimensionalen Objektes erfolgt im Allgemeinen computergesteuert aus der erfindungsgemäßen verflüssigten Formmasse nach vorgegebenen Maßen und Formen (CAD).

Zur Herstellung des dreidimensionalen Objektes können übliche Verfahren des 3D-Drucks gemäß dem Stand der Technik wie z.B. in EP-A 1015215 und US 2009/0295032 beschrieben verwendet werden.

Üblicherweise wird zunächst die erfindungsgemäße Formmasse verflüssigt und extrudiert, mehrere Schichten der Formmasse werden auf eine Basis wie einen Träger oder eine vorhergehende Schicht der Formmasse aufgebracht, und dann wird das geformte Material durch Kühlen unter die Erstarrungstemperatur der Formmasse verfestigt.

Die erfindungsgemäßen Formmassen weisen ein optimiertes Zähigkeit/Viskositätsverhältnis auf und eignen sich von daher hervorragend für den 3D-Druck. Ein weiterer Vorteil für den Heimanwendungsbereich ist, dass die Formmasse geruchsarm ist, da sie nur einen geringen Restmonomergehalt sowie Lösungsmittelgehalt aufweist.

## Patentansprüche

1. Thermoplastische Formmasse für den 3D-Druck enthaltend Komponenten A, B und C:
A: 40 bis 100 Gew.-% mindestens eines Polymers A mit einer mittleren Molmasse Mw von 150.000 bis 360.000 g/mol, ausgewählt aus der Gruppe bestehend aus: Standard-Polystyrol, schlagfestem Polystyrol (HIPS), Styrol-Acrylnitril-Copolymeren, α-Methylstyrol-Acrylnitril-Copolymeren, Styrol-Maleinsäureanhydrid-Copolymeren, Styrol-Phenylmaleinimid-Copolymeren, Styrol-Methylmethacrylat-Copolymeren, Styrol-Acrylnitril-Maleinsäureanhydrid-Copolymeren, Styrol-Acrylnitril-Phenylmaleinimid-Copolymeren, α-Methylstyrol-Acrylnitril-Methylmethacrylat-Copolymeren, α-Methylstyrol-Acrylnitril-t-Butylmethacrylat-Copolymeren und Styrol-Acrylnitril-t-Butylmethacrylat-Copolymeren, wobei in dem schlagfesten Polystyrol enthaltend Polystyrol und Dienkautschuk, der Dienkautschukanteil 5 bis 12 Gew.-% und der Polystyrolanteil 88 bis 95 Gew.-% beträgt und deren Summe 100 Gew.-% ergibt;
B: 0 bis 60 Gew.-% eines oder mehrerer weiterer Polymere B ausgewählt aus: Polycarbonaten, Polyamiden, Poly(meth)acrylaten und Polyestern und Vinylaromat-Dien-Copolymeren (SBC),
C: 0 bis 50 Gew.-% übliche Additive und Hilfsmittel,
wobei die Anteile von A, B und C jeweils auf die gesamte Formmasse bezogen sind und deren Summe 100 Gew.-% ergibt,
**dadurch gekennzeichnet, dass** die Viskosität (gemessen nach ISO 11443) der Formmasse bei Scherraten von 1 bis 10 1/s und bei Temperaturen von 250 °C nicht höher als 1x10⁵ Pa*s ist und die Melt Volume Rate (MVR, gemessen nach ISO 1133 bei 220°C und 10 kg Last) mehr als 6 ml/10 min beträgt,
der Restmonomergehalt nicht mehr als 2000 ppm beträgt, und
der Lösungsmittelgehalt nicht mehr als 1000 ppm beträgt.

2. Formmasse gemäß Anspruch 1, **dadurch gekennzeichnet, dass** mindestens die Hälfte der in der Formmasse enthaltenen Polymere amorphe Polymere sind.

3. Formmasse gemäß Anspruch 1 oder 2, **dadurch gekennzeichnet, dass** als Polymer A Polymer A schlagfestes Polystyrol und/oder Standard-Polystyrol eingesetzt wird.

4. Formmasse gemäß einem der Ansprüche 1 bis 3, enthaltend:
40 bis 100 Gew.-% Polymer A,
0 bis 60 Gew.-% Polymer B und
0,1 bis 40 Gew.-% Mineralien C.

5. Formmasse gemäß einem der Ansprüche 1 bis 4, enthaltend:
70 bis 100 Gew.-% Polymer A,
0 bis 30 Gew.-% Polymer B und
0,2 bis 30 Gew.-% Mineralien C.

6. Formmasse gemäß einem der Ansprüche 1 bis 5, **dadurch gekennzeichnet, dass** der lineare thermische Ausdehnungskoeffizient CLTE kleiner 100 x 10⁻⁶ 1/K ist.

7. Formmasse gemäß einem der Ansprüche 1 bis 6, **dadurch gekennzeichnet, dass** der Gehalt an Übergangsmetallen nicht mehr als 500 ppm beträgt.

8. Formmasse gemäß einem der Ansprüche 1 bis 7, enthaltend:
40 bis 99,9 Gew.-% Polymer A,
0 bis 59,9 Gew.-% Polymer B und
0,1 bis 40 Gew.-% Mineralien C.

9. Formmasse gemäß einem der Ansprüche 1 bis 8 enthaltend:
70 bis 99,8 Gew.-% Polymer A,
0 bis 29,8 Gew.-% Polymer B und
0,2 bis 30 Gew.-% Mineralien C.

10. Verwendung der Formmasse gemäß einem der Ansprüche 1 bis 9 für den 3D-Druck.

11. Verwendung der Formmasse gemäß einem der Ansprüche 1 bis 10 in 3D-Druckern für die Heimanwendung.

## Claims

1. A thermoplastic molding composition for 3D printing, comprising components A, B and C:
A: 40 to 100 wt% of at least one polymer A having an average molar mass Mw of 150 000 to 360 000 g/mol,
selected from the group consisting of: standard polystyrene, impact-resistant polystyrene (HIPS), styrene-acrylonitrile copolymers, α-methylstyrene-acrylonitrile copolymers, styrene-maleic anhydride copolymers, styrene-phenylmaleimide copolymers, styrene-methyl methacrylate copolymers, styrene-acrylonitrile-maleic anhydride copolymers, styrene-acrylonitrile-phenylmaleimide copolymers, α-methylstyrene-acrylonitrile-methyl methacrylate copolymers, α-methylstyrene-acrylonitrile-tert-butyl methacrylate copolymers, and styrene-acrylonitrile-tert-butyl methacrylate copolymers, where, in the high-impact polystyrene comprising polystyrene and diene rubber, the diene rubber fraction is 5 to 12 wt% and the polystyrene fraction is 88 to 95 wt% and the sum thereof makes 100 wt%;
B: 0 to 60 wt% of one or more further polymers B selected from: polycarbonates, polyamides, poly(meth)acrylates and polyesters and vinylaromatic-diene copolymers (SBC),
C: 0 to 50 wt% of customary additives and auxiliaries,
the fractions of A, B and C being based in each case on the overall molding composition and the sum thereof making 100 wt%, **characterized in that** the viscosity (measured to ISO 11443) of the molding composition at shear rates of 1 to 10 1/s and at temperatures of 250°C is not higher than 1×10⁵ Pa*s and the melt volume rate (MVR, measured to ISO 1133 at 220°C and 10 kg load) is more than 6 ml/10 min; the residual monomer content is not more than 2000 ppm, and the solvent content is not more than 1000 ppm.

2. The molding composition as claimed in claim 1, **characterized in that** at least half of the polymers present in the molding composition are amorphous polymers.

3. The molding composition as claimed in claim 1 or 2, **characterized in that** the polymer A polymer A used is impact-resistant polystyrene and/or standard polystyrene.

4. The molding composition as claimed in any of claims 1 to 3, comprising:
40 to 100 wt% of polymer A,
0 to 60 wt% of polymer B, and
0.1 to 40 wt% of minerals C.

5. The molding composition as claimed in any of claims 1 to 4, comprising:
70 to 100 wt% of polymer A,
0 to 30 wt% of polymer B, and
0.2 to 30 wt% of minerals C.

6. The molding composition as claimed in any of claims 1 to 5, **characterized in that** the coefficient of linear thermal expansion is less than 100 × 10⁻⁶ 1/K.

7. The molding composition as claimed in any of claims 1 to 6, **characterized in that** the transition metal content is not more than 500 ppm.

8. The molding composition as claimed in any of claims 1 to 7, comprising:
40 to 99.9 wt% of polymer A,
0 to 59.9 wt% of polymer B, and
0.1 to 40 wt% of minerals C.

9. The molding composition as claimed in any of claims 1 to 8, comprising:
70 to 99.8 wt% of polymer A,
0 to 29.8 wt% of polymer B, and
0.2 to 30 wt% of minerals C.

10. The use of the molding composition as claimed in any of claims 1 to 9 for 3D printing.

11. The use of the molding composition as claimed in any of claims 1 to 10 in 3D printers for home application.

## Revendications

1. Composition de moulage thermoplastique pour impression 3D comprenant les composants A, B et C:
A: 40 à 100% en poids d'au moins un polymère A ayant un poids moléculaire moyen Mw compris entre 150 000 et 360 000 g/mol, choisi dans le groupe comprenant: le polystyrène standard, le polystyrène choc (HIPS), les copolymères styrène-acrylonitrile, les copolymères α-méthylstyrène-acrylonitrile, les copolymères styrène-anhydride de l'acide maléique, les copolymères styrène-phénylmaléinimide, les copolymères styrène-méthylméthacrylate, les copolymères styrène-acrylonitrile-anhydride de l'acide maléique, les copolymères styrène-acrylonitrile-phénylmaléinimide, les copolymères α-méthylstyrène-acrylonitrile-méthylméthacrylate, les copolymères α-méthylstyrène-acrylonitrile-t-butylméthacrylate, les copolymères styrène-acrylonitrile-t-butylméthacrylate où, dans le polystyrène choc contenant du polystyrène et du caoutchouc diénique, la teneur en caoutchouc diénique est de 5 à 12% en poids et la teneur en polystyrène est de 88 à 95% en poids, leur somme formant au total 100% en poids;
B: 0 à 60% en poids d'un ou plusieurs autres polymères B choisis parmi les polycarbonates, les polyamides, les poly(méth)acrylates et les polyesters et copolymères styrène-diéne (SBC),
C: 0 à 50% en poids d'additifs et auxiliaires classiques,
dans lesquels les proportions de A, B, et C, respectivement, sont exprimés par rapport à la totalité de la composition de moulage et leur somme est de 100% en poids,
ces compositions de moulage étant **caractérisées**
- **en ce que** la viscosité (mesurée selon la norme ISO 11443) de la composition de moulage pour des vitesses de cisaillement de 1 à 10 1/s et des températures de 250°C, est non supérieure à 1 x10⁵ Pa*s
- **en ce que** le débit de masse fondue (MVR, mesuré selon la norme ISO 1133 à 220°C et 10 kg de charge) est supérieur à 6 ml/10 min,
- **en ce que** la teneur en monomères résiduels de la composition de moulage ne dépasse pas 2000 ppm, et
- **en ce que** la teneur en solvant ne dépasse pas 1000 ppm.

2. Composition de moulage selon la revendication 1, **caractérisée en ce qu'**au moins la moitié des polymères contenus dans la composition de moulage sont des polymères amorphes.

3. Composition de moulage selon la revendication 1 ou 2, **caractérisée en ce que** l'on utilise comme polymère A du polystyrène choc et/ou du polystyrène standard.

4. Composition de moulage selon l'une des revendications 1 à 3, comprenant:
40 à 100% en poids de polymère A,
0 à 60% en poids de polymère B et
0,1 à 40% en poids de minéraux C.

5. Composition de moulage selon l'une des revendications 1 à 4, comprenant:
70 à 100% en poids de polymère A,
0 à 30% en poids de polymère B et
0,2 à 30% en poids de minéraux C.

6. Composition de moulage selon l'une des revendications 1 à 5, **caractérisée en ce que** le coefficient de dilatation thermique linéaire CLTE est inférieur à 100 x 10⁻⁶ 1/K.

7. Composition de moulage selon l'une des revendications 1 à 6, **caractérisée en ce que** la teneur en métaux de transition ne dépasse pas 500 ppm.

8. Composition de moulage selon l'une quelconque des revendications 1 à 7, comprenant:
40 à 99,9% en poids de polymère A,
0 à 59,9% en poids de polymère B et
0,1 à 40% en poids de minéraux C.

9. Composition de moulage selon l'une quelconque des revendications 1 à 8, comprenant:
70 à 99,8% en poids de polymère A,
0 à 29,8% en poids de polymère B et
0,2 à 30% en poids de minéraux C.

10. Utilisation de la composition de moulage selon l'une des revendications 1 à 9, dans des imprimantes 3D.

11. Utilisation de la composition de moulage selon l'une quelconque des revendications 1 à 10, dans des imprimantes 3D à usage domestique.
